(19) Europäisches Patentamt
European Patent Office
Office européen des brevets

(11) **EP 1 884 633 B1**

(12) **EUROPÄISCHE PATENTSCHRIFT**

(45) Veröffentlichungstag und Bekanntmachung des Hinweises auf die Patenterteilung:
**22.08.2012 Patentblatt 2012/34**

(51) Int Cl.:
*F01N 13/18* (2010.01)   *F16L 11/15* (2006.01)
*F16L 11/16* (2006.01)   *F16L 11/18* (2006.01)
*F16L 27/111* (2006.01)   *F16L 51/02* (2006.01)

(21) Anmeldenummer: **07011015.0**

(22) Anmeldetag: **05.06.2007**

(54) **Flexibles Leitungselement**

Flexible piping element

Elément de conduite flexible

(84) Benannte Vertragsstaaten:
**DE FR GB IT**

(30) Priorität: **25.07.2006 DE 202006011404 U**

(43) Veröffentlichungstag der Anmeldung:
**06.02.2008 Patentblatt 2008/06**

(73) Patentinhaber: **Witzenmann GmbH**
**75175 Pforzheim (DE)**

(72) Erfinder:
• **Burkhardt, Carlo, Dr.**
**75331 Grunbach (DE)**

• **Gukelberger, Marc**
**76275 Ettlingen (DE)**
• **Heil, Bernhard**
**76307 Karlsbad (DE)**
• **Rösler, René**
**76137 Karlsruhe (DE)**

(74) Vertreter: **Lemcke, Brommer & Partner**
**Patentanwälte**
**Bismarckstrasse 16**
**76133 Karlsruhe (DE)**

(56) Entgegenhaltungen:
**EP-A1- 1 039 205     DE-U1- 20 312 251**

EP 1 884 633 B1

**Beschreibung**

Die Erfindung betrifft ein flexibles Leitungselement, insbesondere für die Abgasanlage eines Kraftfahrzeugs mit Verbrennungsmotor, nach dem Oberbegriff des Anspruchs 1. Demnach umfasst das vorliegende Leitungselement einen ringförmig oder schraubengangförmig gewellten Metallbalg mit rohrförmigen Anschlussstücken, ein den Metallbalg außen umgebendes Geflecht oder Gestricke aus Metalldrähten, sowie einen innerhalb des Metallbalgs verlaufenden, aus ringförmigen Segmenten zusammengesetzten oder aus einem Metallband gewickelten Metallschlauch, der an den Anschlussstücken mit dem Metallbalg verbunden ist. Sowohl der Metallschlauch als auch der Metallbalg können im Querschnitt kreisrund, aber auch oval, stadionförmig abgeflacht oder in einer sonstigen Art und Weise geformt sein.

Im Betrieb eines Kraftfahrzeugs mit Verbrennungsmotor werden durch Schlechtweganregungen, thermische Materialausdehnungen und Lastwechselreaktionen, insbesondere jedoch durch das Schwingungsverhalten des laufenden Verbrennungsmotors axiale, laterale und angulare Bewegungen und Schwingungen der Abgasanlage hervorgerufen, die zur Abstrahlung von Körperschall sowie zur Materialermüdung und Brüchen in der Abgasanlage führen können. Deshalb werden stromabwärts des Motors üblicherweise flexible Leitungselemente der eingangs genannten Art in die Abgasanlage eingesetzt, um die genannten Bewegungen und Schwingungen aufzunehmen bzw. von einer Einleitung in die Abgasanlage abzukoppeln.

Die Schwingungsentkopplung der Abgasanlage von den Motorschwingungen im Fahrbetrieb wird maßgeblich von der axialen dynamischen Gesamtsteifigkeit des flexiblen Leitungsteils beeinflusst.

Aus der EP-A-1 039 205 ist ein flexibles Leitungselement der eingangs genannten Art bekannt. Es besteht aus einem gewellten Metallbalg, einem Außengeflecht sowie einem als Liner eingelegten Agraffschlauch. Der Agraffschlauch wird durch Tordieren gegen die Wickelrichtung in seinem Umfang so weit vergrößert, bis er an den Innenkrempen des Metallbalgs anliegt.

Aus der DE 203 12 251 U1 ist ebenfalls ein flexibles Leitungselement mit einem Metallbalg, Anschlussstücken, einem Außengestricke und einem Liner für die Abgasanlage eines Kraftfahrzeugs bekannt. Allerdings ist der Liner hier ein Geflechtsschlauch, um die Funktionsfähigkeit des flexiblen Leitungselements über eine lange Zeit hinweg garantieren zu können.

Es ist nun zu beobachten, dass die dynamische Axialsteifigkeit eines in Rede stehenden flexiblen Leitungselements nach wenigen tausend Kilometern Fahrbetrieb im Kraftfahrzeug zunimmt, d.h. das flexible Leitungselement verhärtet sich im Fahrbetrieb, wodurch sich seine schwingungsentkoppelnden Eigenschaften verschlechtern. Dies macht sich insbesondere in einer erhöhten Körperschallabstrahlung der Abgasanlage bemerkbar.

Der vorliegenden Erfindung liegt daher die Aufgabe zugrunde, ein flexibles Leitungselement der eingangs genannten Art hinsichtlich seiner schwingungsentkoppelnden Eigenschaften auch nach mehreren tausend Kilometern Fahrbetrieb zu verbessern.

Gelöst ist diese Aufgabe durch ein flexibles Leitungselement nach den Merkmalen des Anspruchs 1. Bevorzugte Ausgestaltungen und Weiterbildungen der Erfindung ergeben sich aus den Ansprüchen 2 bis 5.

Das flexible Leitungselement mit den eingangs genannten Komponenten wird erfindungsgemäß also dadurch verbessert, dass der Metallschlauch, der gasströmungsführend im Inneren des Metallbalgs angeordnet ist, solcherart gefertigt wird, dass er nach einem Betrieb des Kraftfahrzeugs von mindestens zweitausend Kilometern Fahrstrecke eine normierte axiale Verlustarbeit von unter 50 bis 75 Nmm/mm, vorzugsweise von unter etwa 40 Nmm/mm aufweist. Die normierte axiale Verlustarbeit wird hierbei berechnet aus dem Quotienten der sich bei quasistatischer axialer Bewegung ergebenden Hysteresefläche und des der Messung zugrunde gelegten Axialwegs, wobei der Axialweg innerhalb des linearen Arbeitsbereichs vor Erreichen der Zug- und Druckprogression der Axialkräfte liegt, welche Progression durch die zugbegrenzenden bzw. die druckbegrenzenden Eigenschaften des Metallschlauchs, der maximal ausgezogen ist bzw. auf Block geht, hervorgerufen wird.

Erfindungsgemäß ist also erkannt worden, dass unter den vielen Eigenschaften eines vorliegenden flexiblen Leitungselements, wie die Steifigkeit des Metallbalgs und dessen ein- oder mehrlagige Ausführung, dessen Randeffekte durch das Vorhandensein oder Nichtvorhandensein von Vorwellen und der Form seiner Wellungen, den Eigenschaften des Außengeflechts oder Außengestrickes, wie beispielsweise dessen Drahtstärke, dessen Maschenform und -dichte sowie dessen Anlagekraft auf den Außenkrempen des Metallbalgs, die axiale dynamische Gesamtsteifigkeit letztendlich doch hauptsächlich von der inneren Reibung des Metallschlauchs bei der Bewegung der einzelnen Schlauchsegmente oder -wicklungen gegeneinander bestimmt wird. Diese innere Reibung hängt von der Querschnittsform der Segmente oder Wicklungen ab, welche die gegeneinander reibende Fläche bei einer axialen Bewegung des Metallschlauchs definiert, sowie von der Art der Wicklung und insbesondere auch von den Oberflächeneigenschaften der aufeinander reibenden Oberflächen der Segmente bzw. Wicklungen. Diese innere Reibung des Metallschlauchs führt zu einer höheren von diesem aufgenommenen Verlustarbeit bei Axialbewegungen, was sich negativ auf die schwingungsentkoppelnden Eigenschaften des Leitungselementes auswirkt.

Dementsprechend ist es nach der vorliegenden Erfindung vorgesehen, das erfindungsgemäß als maßgeblich erkannte Bauteil, den Metallschlauch, von vornherein so zu fertigen, dass er nach einem Betrieb

des Kraftfahrzeugs von mindestens 2.000 Kilometern Fahrstrecke eine normierte axiale Verlustarbeit von unter 50 bis 75 Nmm/mm, vorzugsweise unter etwa 40 Nmm/mm aufweist.

Die übliche Wärmeversteifung im Fahrbetrieb entspricht einem Faktor 3 bis 5 bezüglich der Verlustarbeit, d.h. um die erfindungsgemäßen Eigenschaften nach etwa 2.000 Kilometern Fahrtstrecke zu erreichen, müsste der Metallschlauch so gefertigt werden, dass er im Einbauzustand eine sehr geringe Verlustarbeit von unter 5 Nmm/mm aufweist. Dies führt allerdings bei den üblichen Bauteillängen zu einer sehr hohen Beweglichkeit des Metallschlauchs innerhalb des Metallbalgs und einer dementsprechend hohen Gefahr von Anschlaggeräuschen ("Klappern") was gerade bei Neufahrzeugen, die das erfindungsgemäße Leitungsteil im Einbauzustand enthalten, nicht toleriert wird. Daher ist es erfindungsgemäß außerdem vorgesehen, den Metallschlauch durch ein geeignetes Herstellungsverfahren oder Nachbearbeitungsmaßnahmen, wie etwa einer Wärmebehandlung im Einbauzustand, so zu verändern, dass die normierte axiale Verlustarbeit im Fahrbetrieb des Kraftfahrzeugs um sehr viel weniger zunimmt. Erfindungsgemäß ist eine normierte axiale Verlustarbeit im Einbauzustand von 5 bis 15 Nmm/mm, vorzugsweise 10 bis 15 Nmm/mm vorgesehen, so dass das Auftreten von Klappergeräuschen ausgeschlossen ist.

Der Metallschlauch des erfindungsgemäßen flexiblen Leitungselements ist vorzugsweise als Agraffschlauch ausgebildet, also als Wickelschlauch aus einem S-förmig profilierten Metallband, wobei die Bandkanten benachbarter Bandwindungen im gewickelten Zustand ineinander greifen. Dieser Eingriff ist relativ dicht, um eine saubere Strömungsführung des durch den Wickelschlauch geführten Abgasstromes zu gewährleisten. Dementsprechend sind die Reibungskräfte zwischen den aneinander liegenden Bandkanten jeweils benachbarter Bandwicklungen für die hier in Rede stehende Verlustarbeit des Metallschlauchs hauptsächlich verantwortlich. Variationen im Metallbandprofil, in den Oberflächeneigenschaften, der Dimensionierung und/oder der Kraft, mit der die Bandkanten jeweils aneinanderliegen, führen bei einem solchen bevorzugt verwendeten Agraffschlauch dann zu den erfindungsgemäß erwünschten Werten der Verlustarbeit.

Anhand der beigefügten Zeichnungen wird im Folgenden ein Ausführungsbeispiel der vorliegenden Erfindung beschrieben und näher erläutert. Es zeigen:

Figur 1     eine schematische, teilgeschnittene Ansicht eines flexiblen Leitungselements nach der vorliegenden Erfindung;

Figur 2     ein Diagramm zur normierten axialen Verlustarbeit.

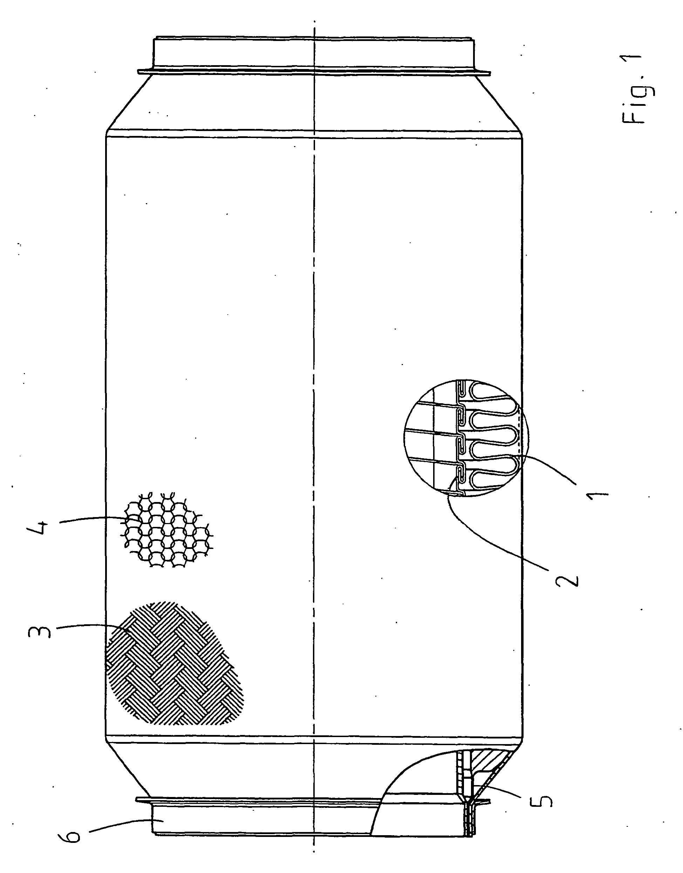

Das in Figur 1 dargestellte flexible Leitungselement besteht aus einem ringförmig gewellten Metallbalg 1, einem innerhalb des Metallbalgs 1 verlaufenden strömungsführenden, aus einem profilierten Metallband gewickelten Metallschlauch 2, der als Agraffschlauch ausgeführt ist, und einem den Metallbalg 1 außen ganzflächig umgebenden Geflecht 3 oder Gestricke 4, das wie auch der Metallschlauch 2 an zwei endständigen Anschlussstücken 5 des Metallbalgs 1 befestigt ist. Das Geflecht 3 oder das Gestricke 4 ist mittels Endhülsen 6 an den Anschlussstücken 5 des Metallbalgs 1 befestigt. Die Darstellung des Geflechts 3 ist wie die Darstellung des Gestrickes 4 symbolisch und beispielhaft; zum Einsatz kommt jeweils nur eine dieser beiden Alternativen.

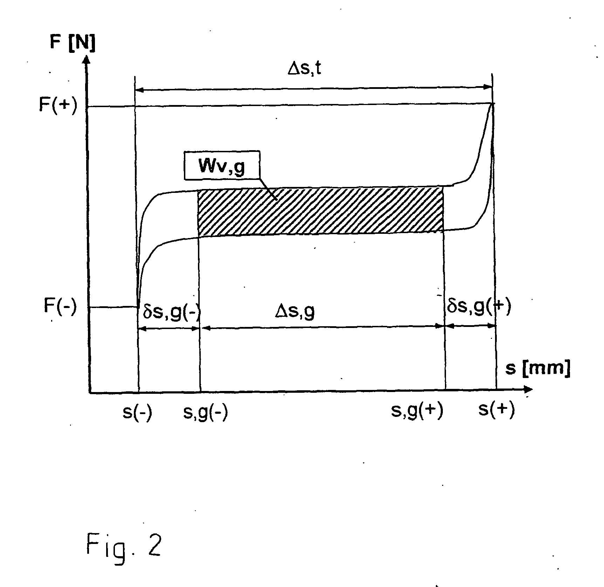

Figur 2 zeigt ein Diagramm zur normierten axialen Verlustarbeit des Metallschlauchs 2. Hier ist die Kraft F über dem Weg s einer axialen Auslenkung des Metallschlauchs 2 aufgetragen, wobei die normierte axiale Verlustarbeit wie folgt definiert ist:

Der Metallschlauch wird zum Gängigmachen von der Stauchlage ausgehend in die Strecklage des zugehörigen kompletten Leitungselements und wieder zurück axial bewegt. Anschließend wird diese Bewegung wiederholt und dabei der Kraft-Weg-Verlauf (F über s) bestimmt. Die Endpunkte der Bewegung werden kraftgesteuert mit Kräften zwischen 400 und 900 N angefahren. Die Kraft muss groß genug sein, damit der Endanschlag sicher erreicht wird, darf aber nicht so groß sein, dass Schädigungen des Bauteils eintreten. Die Geschwindigkeit der Bewegung darf 100 mm pro Minute nicht überschreiten. Die Prüfgrenzen entsprechen den Werten F(+) und F(-) für die aufgebrachte Kraft bzw. s(+) und s(-) für den Messweg. s ist hierbei der Weg einer rein axialen Bewegung, da eine axiale Verlustarbeit ermittelt werden soll.

Beim Auftragen des Kraft-Weg-Verlaufs ergibt sich die in Figur 2 dargestellte Hysteresekurve, deren Fläche die axiale Verlustarbeit ist. Um Randeffekte zu vermeiden, wird allerdings nicht die gesamte Hysteresefläche für den Gesamtweg $\Delta s,t$ ($\Delta s,t = s(+)-s(-)$) berechnet, sondern es werden die Umkehrbereiche der Hysteresekurve durch Abziehen eines Bewegungsweges $\delta s$, g(-) und $\delta s,g(+)$ an jeder Seite der Hysterese verkleinert, so dass die für die Berechnung zugrunde gelegte Wegstrecke $\Delta s,g$ innerhalb des Bereiches liegt, in dem sich der Metallschlauch linear verhält.

Aus der in Figur 2 schraffiert dargestellten Hysteresefläche (Wv,g) von der die Umkehrbereiche abgeschnitten sind, kann dann aus der Formel

$$W_{v,g} = \int_{s,g(-)}^{s,g\,(+)} F(s)\,ds$$

die normierte axiale Verlustarbeit

$$Wvn,g = Wv,g/\Delta s,g \ [Nmm/mm=N]$$

ermittelt werden.

**Patentansprüche**

1.  Flexibles Leitungselement für die Abgasanlage eines Kraftfahrzeugs mit Verbrennungsmotor, umfassend einen ringförmig oder schraubengangförmig gewellten Metallbalg (1) mit rohrförmigen Anschlussstücken (5), ein den Metallbalg (1) außen umgebendes Geflecht oder Gestricke (4) aus Metalldrähten, sowie einen innerhalb des Metallbalgs (1) verlaufenden, aus ringförmigen Segmenten zusammengesetzten oder aus einem Metallband gewickelten Metallschlauch (2), der an den Anschlussstücken (5) mit dem Metallbalg (1) verbunden ist, **dadurch gekennzeichnet,**
    **dass** der Metallschlauch (2) so gefertigt ist, dass er nach einem Betrieb
    des Kraftfahrzeugs von mindestens 2.000 Kilometern Fahrstrecke eine normierte axiale Verlustarbeit (Wvn,g) von unter 50 bis 75 Nmm/mm aufweist, während er im Einbauzustand eine normierte axiale Verlustarbeit (Wvn,g) von 5 bis 15 Nmm/mm aufweist.

2.  Flexibles Leitungselement nach Anspruch 1;
    **dadurch gekennzeichnet,**
    **dass** der Metallschlauch (2) so gefertigt ist, dass er nach einem Betrieb des Kraftfahrzeugs von mindestens 2.000 Kilometern Fahrtstrecke eine normierte axiale Verlustarbeit (Wvn,g) von unter etwa 40 Nmm/mm aufweist.

3.  Flexibles Leitungselement nach einem der Ansprüche 1 oder 2,
    **dadurch gekennzeichnet,**
    **dass** der Metallschlauch (2) so gefertigt ist, dass er im Einbauzustand eine normierte axiale Verlustarbeit (Wvn,g) von 10 bis 15 Nmm/mm aufweist.

4.  Flexibles Leitungselement nach mindestens einem der Ansprüche 1 bis 3,
    **dadurch gekennzeichnet,**
    **dass** der Metallschlauch (2) als Agraffschlauch ausgebildet ist.

5.  Flexibles Leitungselement nach mindestens einem der Ansprüche 1 bis 4,
    **dadurch gekennzeichnet,**
    **dass** der Metallschlauch (2) thermisch vorbehandelt ist, um eine Wärmeversteifung beim Betrieb des Kraftfahrzeugs zu begrenzen.

6.  Verfahren zum Herstellen eines flexiblen Leitungselements nach mindestens einem der Ansprüche 1 bis 5,
**dadurch gekennzeichnet,**
**dass** der Metallschlauch (2) thermisch vorbehandelt wird, um eine Wärmeversteifung beim Betrieb des Kraftfahrzeugs zu begrenzen.

**Claims**

1.  Flexible duct element for the exhaust gas system of a motor vehicle having an internal combustion engine, comprising an annularly or helically corrugated metal bellows (1) having tubular connection pieces (5), a braided or knitted element (4) made of metal wires, which surrounds the metal bellows (1) on the outside, and a metal hose (2) running inside the metal bellows (1) and composed of annular segments or wound from a metal strip, which metal hose is joined to the metal bellows (1) at the connection pieces (5),
    **characterised in that**
    the metal hose (2) is so manufactured that, after the motor vehicle has been operated over a distance of at least 2000 kilometres, the hose exhibits a standard axial energy loss (Wvn,g) of less than from 50 to 75 Nmm/mm, while in the installed state it exhibits a standard axial energy loss (Wvn,g) of from 5 to 15 Nmm/mm.

2.  Flexible duct element according to claim 1,
    **characterised in that**
    the metal hose (2) is so manufactured that, after the motor vehicle has been operated over a distance of at least 2000 kilometres, the hose exhibits a standard axial energy loss (Wvn,g) of less than approximately 40 Nmm/mm.

3.  Flexible duct element according to either one of claims 1 and 2,
    **characterised in that**
    the metal hose (2) is so manufactured that in the installed state it exhibits a standard axial energy loss (Wvn,g) of from 10 to 15 Nmm/mm.

4.  Flexible duct element according to at least one of claims 1 to 3,
    **characterised in that**
    the metal hose (2) is in the form of an interlocked hose.

5.  Flexible duct element according to at least one of claims 1 to 4,
    **characterised in that**
    the metal hose (2) has been subjected to thermal pre-treatment in order to limit thermal stiffening during operation of the motor vehicle.

**6.** Method of producing a flexible duct element according to at least one of claims 1 to 5, **characterised in that** the metal hose (2) is subjected to thermal pre-treatment in order to limit thermal stiffening during operation of the motor vehicle.

**Revendications**

**1.** Élément de conduite flexible pour le système d'échappement d'un véhicule automobile à moteur thermique, comprenant un soufflet métallique (1) à ondulations annulaires ou hélicoïdales et pourvu d'embouts de raccordement tubulaires (5), une tresse ou une tulle (4) de fils métalliques entourant extérieurement le soufflet métallique (1), et un tuyau souple métallique (2) s'étendant à l'intérieur du soufflet métallique (1), composé de segments annulaires ou enroulé à partir d'une bande de métal, tuyau souple qui est relié au soufflet métallique (1) au niveau des embouts de raccordement (5), **caractérisé en ce que** le tuyau souple métallique (2) est fabriqué de telle sorte qu'il présente, après une exploitation du véhicule automobile sur au moins 2 000 kilomètres de distance parcourue, un travail de perte axial normalisé (Wvn,g) inférieur à 50 à 75 Nmm/mm, tandis qu'il présente dans l'état d'installation un travail de perte axial normalisé (Wvn,g) de 5 à 15 Nmm/mm.

**2.** Élément de conduite flexible selon la revendication 1, **caractérisé en ce que** le tuyau souple métallique (2) est fabriqué de telle sorte qu'il présente, après une exploitation du véhicule automobile sur au moins 2 000 kilomètres de distance parcourue, un travail de perte axial normalisé (Wvn,g) inférieur à environ 40 Nmm/mm,

**3.** Élément de conduite flexible selon la revendication 1 ou 2, **caractérisé en ce que** le tuyau souple métallique (2) est fabriqué de telle sorte qu'il présente dans l'état d'installation un travail de perte axial normalisé (Wvn,g) de 10 à 15 Nmm/mm

**4.** Élément de conduite flexible selon l'une des revendications 1 à 3, **caractérisé en ce que** le tuyau souple métallique (2) est réalisé sous forme de tuyau souple à agrafage.

**5.** Élément de conduite flexible selon l'une des revendications 1 à 4, **caractérisé en ce que** le tuyau souple métallique (2) est prétraité thermiquement afin de limiter la rigidification à la chaleur lors de l'exploitation du véhicule automobile.

**6.** Procédé de fabrication d'un élément de conduite flexible selon au moins une des revendications 1 à 5, **caractérisé en ce que** le tuyau souple métallique (2) est prétraité thermiquement afin de limiter la rigidification à la chaleur lors de l'exploitation du véhicule automobile.

EP 1 884 633 B1

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1039205 A

- DE 20312251 U1